(19) Europäisches Patentamt / European Patent Office / Office européen des brevets

(11) **EP 3 567 415 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **19184653.4**

(22) Anmeldetag: **25.02.2010**

(51) Internationale Patentklassifikation (IPC):
**G02B 3/08** (2006.01)   **G02B 27/12** (2006.01)
**G02B 27/01** (2006.01)   **G02B 27/28** (2006.01)
**G02B 27/14** (2006.01)   **G02B 5/02** (2006.01)

(52) Gemeinsame Patentklassifikation (CPC):
**G02B 27/0172; G02B 27/143;** G02B 3/08;
G02B 5/02; G02B 2027/0178

(54) **STRAHLVEREINIGER UND STRAHLTEILER**

BEAM COMBINER AND BEAM SPLITTER

COMBINEUR DE FAISCEAUX ET SÉPARATEUR DE FAISCEAUX

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.02.2009 DE 102009010537**

(43) Veröffentlichungstag der Anmeldung:
**13.11.2019 Patentblatt 2019/46**

(62) Dokumentnummer(n) der früheren Anmeldung(en) nach Art. 76 EPÜ:
**10708164.8 / 2 401 647**

(73) Patentinhaber: **tooz technologies GmbH**
**73430 Aalen (DE)**

(72) Erfinder:
• **DOBSCHAL, Hans-Jürgen**
  **99518 Bad Sulza (DE)**
• **RUDOLPH, Günter**
  **07743 Jena (DE)**
• **LINDIG, Karsten**
  **99084 Erfurt (DE)**

(74) Vertreter: **Patentanwälte Geyer, Fehners & Partner mbB**
**Perhamerstrasse 31**
**80687 München (DE)**

(56) Entgegenhaltungen:
DE-A1-102007 004 444   US-A1- 2002 186 179
US-A1- 2004 085 649

EP 3 567 415 B1

## Beschreibung

Die vorliegende Erfindung betrifft eine einen Strahlvereiniger aufweisende Anzeigevorrichtung mit den Merkmalen des Oberbegriffs des Anspruches 1.

Eine solche Anzeigevorrichtung ist z.B. aus der DE 10 2007 004 444 A1 und der US 2004/0085649 A1 bekannt. Eine weitere Anzeigevorrichtung ist aus US2002/186179 A1 bekannt.

Ein Strahlvereiniger wird z.B. bei einer auf den Kopf eines Benutzers aufsetzbaren Anzeigevorrichtung benötigt, um den Benutzer ein erzeugtes Bild in Überlagerung mit der wahrnehmbaren Umgebung darbieten zu können. Der Strahlvereiniger wird hierbei häufig als gekrümmtes Brillenglas ausgebildet.

Es ist bekannt, eine Strahlvereinigung durch einen teildurchlässigen Spiegel zu realisieren. Jedoch ist die Herstellungstechnologie schwierig, insbesondere wenn das Licht des erzeugten Bildes im Glas geführt wird und das Glas gekrümmt ist.

Ferner kann eine Strahlvereinigung mittels eines optischen Gitters verwirklicht werden. Dies bedingt jedoch oft nachteilig unerwünschtes Streulicht durch zusätzliche Beugungsordnungen. Ferner ist ein solches Gitter häufig nur sehr schmalbandig, so daß das erzeugte Bild nur einfarbig sein kann.

Ausgehend hiervon ist es Aufgabe der Erfindung, eine Anzeigevorrichtung mit einem verbesserten Strahlvereiniger zur Verfügung zu stellen.

Die Erfindung ist in Anspruch 1 definiert. Vorteilhafte Ausgestaltungen sind in den abhängigen Ansprüchen angegeben.

Aufgrund der Umlenkelemente, die reflektiv und/oder refraktiv wirken, kann eine Strahlvereinigung für große Wellenlängenbereiche realisiert werden (insbesondere im Vergleich zu herkömmlichen Strahlvereiniger mittels Beugungsgittern).

Da der erste Abschnitt eine abbildende Funktion für das zweite Strahlenbündel besitzt, wird nicht nur eine gewünschte Strahlvereinigung durchgeführt, sondern auch gleich abbildende Eigenschaften mittels des ersten Abschnitts realisiert. Die abbildende Eigenschaft des ersten Abschnittes kann einer gedachten optischen Wirkfläche entsprechen, die gekrümmt ist und bevorzugt keine Spiegel- und Rotationssymmetrie aufweist. Auch kann die Wirkfläche keine Translationssymmetrie aufweisen. Natürlich ist es auch möglich, daß die gedachte optische Wirkfläche rotationssymmetrisch (z.B. Rotationsasphäre) oder torisch ist.

Insbesondere kann die Fläche des ersten Abschnitts, in Draufsicht auf den Überlagerungsbereich gesehen, vorzugsweise 5 bis 30 % der Fläche des Überlagerungsbereichs betragen. Der Anteil des ersten Abschnittes am Überlagerungsbereich kann aber auch 50 % oder mehr betragen.

Die Umlenkelemente können an einer Materialgrenzfläche (die plan oder gekrümmt sein kann) des Körpers ausgebildet sein. Damit ist eine besonders einfache Herstellung möglich, z. B. mittels Diamantfräsen. Ferner ist eine Herstellung durch Abform- und Gußverfahren möglich.

Jedes Umlenkelement kann plan ausgebildet sein. Es ist jedoch auch eine gekrümmte Ausbildung der einzelnen Umlenkelemente möglich.

Insbesondere können alle Umlenkelemente gleich ausgebildet sein. Alternativ kann die Ausbildung der Umlenkelemente variieren.

Die Umlenkelemente sind bevorzugt unregelmäßig im Überlagerungsbereich verteilt, können polygonförmig ausgebildet sein und/oder eine maximale Ausdehnung im Bereich von bevorzugt 20 - 30 $\mu$m aufweisen. Die maximale Ausdehnung kann aber auch 200 $\mu$m oder 100 $\mu$m betragen.

Der Strahlvereiniger kann so ausgebildet sein, daß der Teil des Strahlenbündels, der auf den ersten Abschnitt trifft, abgeschattet und somit nicht Teil des gemeinsamen Strahlenbündels wird. Alternativ ist es auch möglich, daß der erste Abschnitt für das erste Strahlenbündel transmissiv ist.

Der erste Abschnitt kann in Art einer nicht zusammenhängenden Fresnel-Struktur ausgebildet sein. Die Fresnel-Struktur kann eine abbildende Eigenschaft aufweisen, die der gedachten optischen Wirkfläche entspricht.

Die reflektive Ausbildung der Umlenkelemente kann durch eine reflektive Beschichtung erfolgen. Die reflektive Beschichtung kann zu einer vollständigen Reflexion oder auch zu einer teilweisen Reflexion führen. Ferner ist es möglich, die reflektive Wirkung durch innere Totalreflexion zu realisieren. In diesem Fall ist keine reflektive Beschichtung notwendig.

Der Strahlvereiniger kann insbesondere so ausgebildet sein, daß das zweite Strahlenbündel im transparenten Körper bis zum Überlagerungsbereich geführt wird. Dies kann beispielsweise durch Reflexionen an den Materialgrenzflächen erfolgen. Insbesondere können dies interne Totalreflexionen sein.

Die Anzeigevorrichtung kann als HMD-Vorrichtung (Head-Mounted-Display-Vorrichtung) bezeichnet werden. Die Anzeigevorrichtung kann dem Fachmann bekannte weitere Elemente zum Betrieb der Anzeigevorrichtung umfassen.

Ferner kann der Strahlvereiniger einen Einkoppelbereich aufweisen, über den das zweite Strahlenbündel in den Strahlvereiniger eingekoppelt und dann im Strahlvereiniger (beispielsweise mittels interner Totalreflexionen) bis zum Überlagerungsbereich geführt wird, wobei der Einkoppelbereich als Fresnel-Fläche ausgebildet ist, die eine Strahlengangfaltung bewirkt.

Bevorzugt weist die Fresnel-Fläche eine abbildende Eigenschaft für das zweite Strahlenbündel auf. Insbesondere kann die Fresnel-Fläche und/oder der Überlagerungsbereich an einer gekrümmten Materialgrenzfläche des Strahlvereinigers ausgebildet sein.

Die Fresnel-Fläche kann insbesondere in gleicher Art und Weise wie der Überlagerungsbereich des Strahlvereinigers weitergebildet werden.

Der erfindungsgemäße Strahlvereiniger kann beispielsweise auch in einem Helmvisier integriert sein, damit dem Träger des Helmes über den Überlagerungsbereich z.B. Informationen eingespiegelt werden können.

Der Überlagerungsbereich wird bevorzugt möglichst in einer Pupille des optischen Systems oder möglichst nahe zu einer Pupille des optischen Systems angeordnet.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1        eine schematische Ansicht einer Anzeigevorrichtung mit einem erfindungsgemäßen Strahlvereiniger;
Fig. 2        eine Draufsicht auf den Überlagerungsbereich 9 des Strahlvereinigers 1 von Fig. 1;
Fig. 3        eine vergrößerte Schnittansicht entlang der Schnittlinie B-B in Fig. 2;
Fig. 4        eine vergrößerte Ansicht des Details C1 von Fig. 3;
Fig. 5        eine schematische Ansicht zur Erläuterung der Anordnung der Umlenkelemente;
Fig. 6        eine weitere schematische Ansicht zur Erläuterung der Anordnung der Umlenkelemente;
Fig. 7        eine vergrößerte Ansicht des Details C2 von Fig. 3;
Fig. 8        eine vergrößerte Ansicht des Details C2 von Fig. 3 gemäß einer ersten Abwandlung;
Fig. 9        eine vergrößerte Ansicht des Details C2 von Fig. 3 gemäß einer weiteren Abwandlung;
Fig. 10 - 12   Beispiele weiterer Profilformen für die Umlenkelemente 12;
Fig. 13       eine perspektivische Ansicht einer Weiterbildung des Multifunktionsglases 1 von Fig. 1;
Fig. 14       eine vergrößerte Schnittansicht entlang der Schnittlinie D-D in Fig. 13;
Fig. 15       eine perspektivische Ansicht einer weiteren Ausführungsform des Multifunktionsglases 1 von Fig. 1 ;
Fig. 16       eine perspektivische Ansicht einer weiteren Ausführungsform des Multifunktionsglases 1 von Fig. 1;
Fig. 17A      eine vergrößerte Schnittdarstellung entlang der Schnittlinie E-E in Fig. 16;
Fig. 17B      eine Abwandlung der Schnittdarstellung von Fig. 17A;
Fig. 18A      eine schematische Seitenansicht einer weiteren Ausführungsform der erfindungsgemäßen Anzeigevorrichtung 2;
Fig. 18B      eine perspektivische Darstellung der Anzeigevorrichtung von Fig. 18A;
Fig. 18C      eine Draufsicht des Überlagerungsbereiches 9 des Multifunktionsglases 1 von Fig. 18A und 18B;
Fig. 18D      eine perspektivische Darstellung einer weiteren Ausführungsform der erfindungsgemäßen Anzeigevorrichtung 2;
Fig. 18E      eine perspektivische Darstellung einer weiteren Ausführungsform der erfindungsgemäßen Anzeigevorrichtung 2;
Fig. 19       eine perspektivische Ansicht einer weiteren Ausführungsform des Multifunktionsglases 1 von Fig. 1 ;
Fig. 20       eine perspektivische Ansicht einer weiteren Ausführungsform des Multifunktionsglases 1 von Fig. 1;
Fig. 21       eine perspektivische Ansicht einer weiteren Ausführungsform des Multifunktionsglases 1 von Fig. 1, und
Fig. 22       eine Weiterbildung des Umlenkspiegels 12 des erfindungsgemäßen Strahlvereinigers.

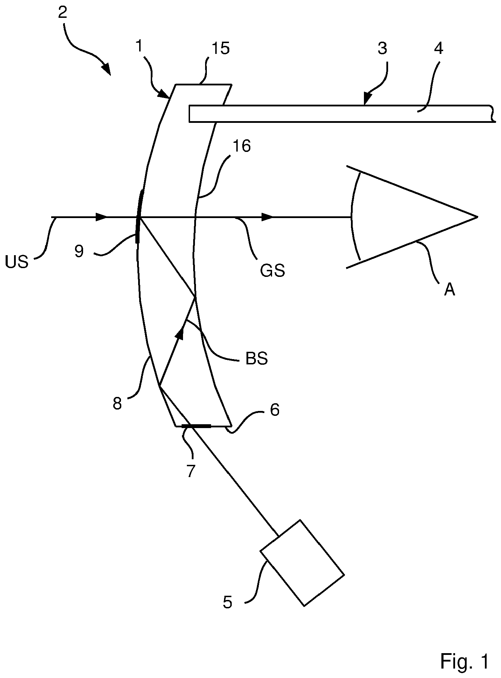

Bei der in den Figuren 1 bis 3 gezeigten Ausführungsform ist der erfindungsgemäße Strahlvereiniger 1 als Multifunktionsglas einer Anzeigevorrichtung 2 ausgebildet, die eine auf den Kopf eines Benutzers aufsetzbare Haltevorrichtung 3 in Form eines Brillengestells umfaßt, wobei in Fig. 1 lediglich ein Seitenbügel 4 schematisch eingezeichnet ist.

Der Strahlvereiniger 1 ist so an der Haltevorrichtung 3 befestigt, daß er im auf den Kopf aufgesetzten Zustand der Haltevorrichtung 3 in Art eines Brillenglases vor einem Auge A des Benutzers angeordnet ist. Durch den Strahlvereiniger 1 hindurch kann der Benutzer die Umgebung wahrnehmen.

Die Anzeigevorrichtung 2 umfaßt ferner ein Bilderzeugungsmodul 5, mit dem ein Bild erzeugt wird, das dem Benutzer der Anzeigevorrichtung 2 in Überlagerung mit der für den Benutzer durch das Multifunktionsglas 1 hindurch wahrnehmbaren Umgebung, wenn der Benutzer die Anzeigevorrichtung auf dem Kopf trägt, dargeboten wird.

Dazu weist das Multifunktionsglas 1 an seiner Unterseite 6 einen Einkoppelabschnitt 7 und an seiner Vorderseite 8 einen Überlagerungsbereich 9 auf. Wie nachfolgend noch detailliert beschrieben wird, transmittiert der Überlagerungsbereich 9 Umgebungslicht US, ohne es abzulenken. Ferner lenkt der Überlagerungsbereich 9 vom Bilderzeugungsmodul 5 kommendes Licht BS, das über den Einkoppelabschnitt 7 in das Multifunktionsglas 1 eingekoppelt ist und in ihm durch innere Totalreflexion bis hin zum Überlagerungsbereich 9 geführt wird, in Richtung zum Auge A des Benutzers hin so um, daß der Benutzer das erzeugte Bild als virtuelles Bild in Überlagerung mit der Umgebung wahrnehmen kann.

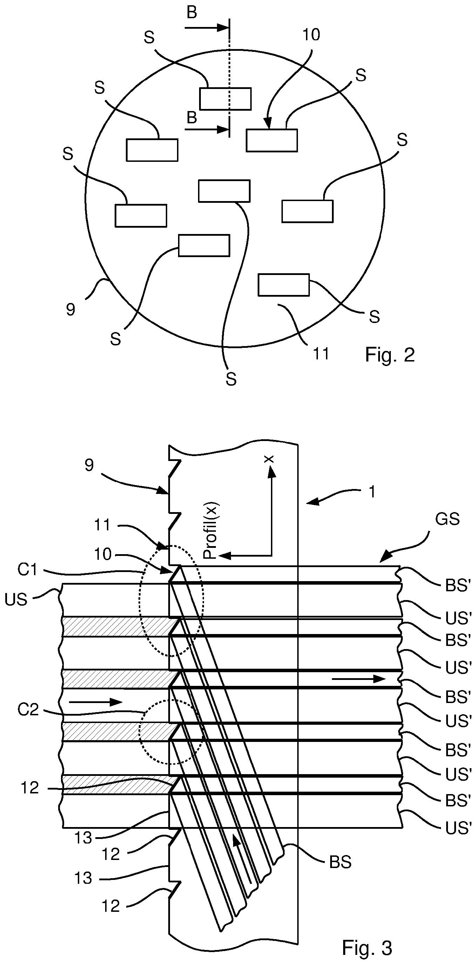

Der Überlagerungsbereich 9 ist, wie insbesondere der Draufsicht in Fig. 2 entnommen werden kann, im wesentlichen kreisförmig ausgebildet und in einen ersten Abschnitt 10 und einen zweiten Abschnitt 11 aufgeteilt, wobei der erste Abschnitt 10 zur Umlenkung des vom Bilderzeugungsmoduls 5 kommenden Bildstrahlenbündels BS und der zweite Abschnitt 11 zur Transmission des von der Umgebung kommenden Umgebungsstrahlenbündels US dient. Der Überlagerungsbereich 9 weist eine Vielzahl von voneinander beabstandeten Unterabschnitten S auf, die bei der hier beschriebenen Ausführungsform zufällig im Überlagerungsbereich 9 verteilt sind.

Wie aus der vergrößerten Schnittdarstellung entlang der Linie B-B eines der Unterabschnitte S in Fig. 3 ersichtlich ist, weist jeder Unterabschnitt S eine Vielzahl von voneinander beabstandeten Umlenkspiegeln 12 auf, die sich hier senkrecht zur Zeichenebene von Fig. 3 erstrecken.

Die Bereiche zwischen den Umlenkspiegeln 12 in den Unterabschnitten S sowie die restlichen Bereiche des Überlagerungsbereiches 9 neben den Unterabschnitten S bilden zusammen den zweiten Abschnitt 11. Der erste Abschnitt 10 wird von den Umlenkspiegeln 12 gebildet.

Wie Fig. 3 ferner entnommen werden kann, sind der Überlagerungsbereich 9 und somit auch die Umlenkspiegel 12 auf der Vorderseite 8 des Multifunktionsglases 1 ausgebildet. Die Vorderseite 8 ist zwar gekrümmt; in der Figur 3 ist zur Vereinfachung der Darstellung die Krümmung jedoch nicht gezeigt. Die Umlenkspiegel 12 sind gegenüber der Normalen der Vorderseite 8 so gekippt, daß der Teil des Bildstrahlenbündels BS, der auf den jeweiligen Umlenkspiegel 12 trifft, zum Auge A hin als Bildteilstrahl BS' umgelenkt wird. Der restliche Teil des Bildstrahlenbündels BS, der nicht auf die Umlenkspiegel 12 trifft, wird an der Vorderseite 8 so reflektiert und/oder transmittiert, daß er für den Benutzer nicht wahrnehmbar ist.

Der Teil des Umgebungsstrahlenbündels US, der (in Fig. 3 von links) auf die Rückseiten der Umlenkspiegel 12 trifft, wird von den Umlenkspiegeln 12 so abgeschattet, daß der Benutzer diesen Teil nicht wahrnehmen kann. Daher ist dieser Teil in Fig. 3 schraffiert eingezeichnet. Der restliche Teil des Umgebungsstrahlenbündels US tritt als Umgebungsteilstrahlen US' durch die transmissiven Bereiche 13 zwischen bzw. neben den Umlenkspiegeln 12 hindurch.

Der Überlagerungsbereich 9 bewirkt somit eine Überlagerung des durch die transmissiven Bereiche 13, die den zweiten Abschnitt 11 bilden, hindurchtretenden Teils US' des Umgebungsstrahlenbündels US mit dem an den Umlenkspiegeln 12 reflektierten Teil BS' des Bildstrahlenbündels BS zu einem gemeinsamen Strahlenbündel GS. Dadurch kann der die Anzeigevorrichtung 2 auf dem Kopf tragender Benutzer das mittels des Bilderzeugungsmoduls 5 erzeugte Bild in Überlagerung mit der Umgebung wahrnehmen.

In der schematischen Darstellung von Fig. 3 verlaufen die Strahlen BS' und US' parallel zueinander. Das muß aber nicht so sein. So findet z.B. aufgrund der Krümmung der Vorderseite eine "Durchmischung" der Strahlen BS' und US' statt.

Der so ausgebildete Strahlvereiniger 1 weist den Vorteil auf, daß er im Vergleich zu bisherigen diffraktiven Lösungen sehr breitbandig ist.

Die einzelnen Umlenkspiegel 12 sind bevorzugt ungleichmäßig über den Überlagerungsbereich 9 verteilt angeordnet, wie dies hier aufgrund der im Überlagerungsbereich 9 zufällig verteilten Unterabschnitten S der Fall ist. Natürlich kann z.B. auch der Abstand zwischen benachbarten Umlenkspiegeln 12 variieren. Es ist auch jede andere Verteilung der Umlenkspiegel 12 im Überlagerungsbereich 9 möglich. Der Flächenanteil der Umlenkspiegel 12 relativ zur gesamten Fläche des Überlagerungsbereiches 9, in Draufsicht auf den Überlagerungsbereich 9 gesehen, kann z.B. im Bereich von 5 - 30 % liegen.

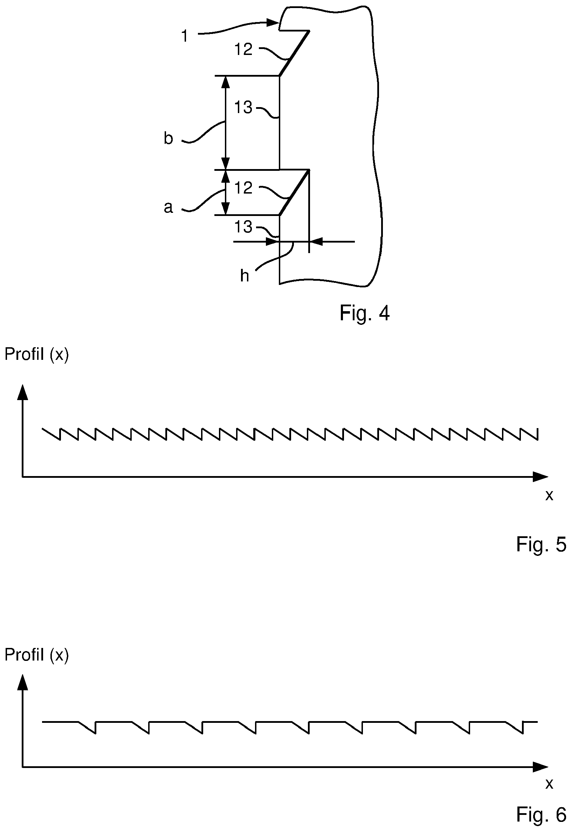

Natürlich ist es auch möglich, daß im gesamten Überlagerungsbereich Umlenkspiegel 12 vorgesehen sind. In diesem Fall kann der oben angegebene Flächenanteil dadurch erreicht werden, daß das Verhältnis b/a im Bereich von 3:1 bis 20:1 liegt (Fig. 4). Die Höhe h liegt bei allen beschriebenen Ausführungsformen bevorzugt im Bereich von 5 - 500 $\mu$m, insbesondere im Bereich von 0,01 - 0,1 mm. Besonders bevorzugt ist ein Bereich von 0,05 - 0,3 mm sowie ein Bereich von 200 - 300 $\mu$m. Für den Parameter a hat sich eine Größe von vorzugsweise 20 - 30 $\mu$m als sehr vorteilhaft erwiesen.

Der erste Abschnitt 10 in Fig. 2 kann wegen der verteilt angeordneten Umlenkspiegel 12 aufgrund der verteilten Unterabschnitte auch als eine nicht zusammenhängende Fresnel-Struktur bezeichnet werden. Diese Fresnel-Struktur kann wie folgt ermittelt werden. Zunächst geht man von der nachfolgend angegebenen allgemeinen Flächen-Funktion f(x,y) aus.

$$f(x,y) = \sum_{i=0}^{N} \sum_{j=0}^{N} ( c_{i,j} x^i y^j ) \tag{1}$$

Die Flächen-Funktion f(x,y) kann insbesondere eine gekrümmte Fläche beschreiben. Die gekrümmte Fläche kann rotationssymmetrisch ausgebildet sein. Beispielsweise kann die Flächen-Funktion eine Rotationsasphäre beschreiben. Es ist jedoch auch möglich, daß sie eine Fläche beschreibt, die gekrümmt ist und keine Spiegel- und Rotationssymmetrie aufweist. Eine solche Fläche kann auch als Freiformfläche bezeichnet werden. Die Freiformfläche kann bevorzugt keine Translationssymmetrie aufweisen.

Durch Vorgeben einer maximalen Furchentiefe h (hier z.B. zwischen 0,01 und 0,1 mm) kann als Profilhöhe unter Berücksichtigung der Höhe z(x,y) der Vorderseite 8 des Multifunktionsglas folgende reale Profil-Funktion abgeleitet werden.

$$\text{profil} = z(\,x,y\,) - \text{modulo}(\,f(\,x,y\,),h\,) \tag{2}$$

Hierbei beschreibt modulo(f(x,y),h) den jeweiligen Fresnel-Anteil, der von 0 bis h ansteigt und dann wieder durch einen Sprung auf 0 abfällt. Somit beschreibt modulo(f(x,y),h) eine Dreiecksfunktion für ein rechtwinkliges Dreieck. Man erhält dadurch folgende durchgehende Profil-Funktion, wie sie in Fig. 5 schematisch gezeigt ist.

Je nach gewünschtem Flächenverhältnis von Umlenkspiegeln 12 zum gesamten Überlagerungsbereich und der Größe und Anzahl der Unterabschnitte S. werden Bereiche bzw. Abschnitte dieser Profil-Funktion durch den sphärischen Radius der Vorderseite 8 des Multifunktionsglases ausgetauscht, so daß sich die nachfolgend in Fig. 6 gezeigte Fresnel-Struktur ergibt. Aufgrund der schematischen Darstellung eines nur geringen Ausschnittes der Vorderseite 8 ist in dieser Darstellung die sphärische Krümmung der Vorderseite nicht erkennbar.

Bei dem hier beschriebenen Ausführungsbeispiel wurden folgende Polynom-Koeffizienten verwendet, wobei die erste Ziffer bei dem Koeffizienten c jeweils für die x-Potenz und die zweite Ziffer für die y-Potenz steht, so daß z.B. c21 der Koeffizient vor xxy ist. Alle nicht aufgeführten Koeffizienten c sind 0.

| | |
|---|---|
| c10 | 3,09E-02 |
| c01 | -5,69E-01 |
| c11 | -1,00E-04 |
| c21 | 2,71E-05 |
| c12 | 1,34E-05 |
| c22 | 2,57E-06 |
| c20 | 3,17E-03 |
| c02 | 2,44E-03 |
| c30 | 2,64E-05 |
| c03 | 2,23E-05 |

Der Brillenglasradius, auf dem die Fresnel-Struktur aufgebracht ist, beträgt hier 105,08 mm.

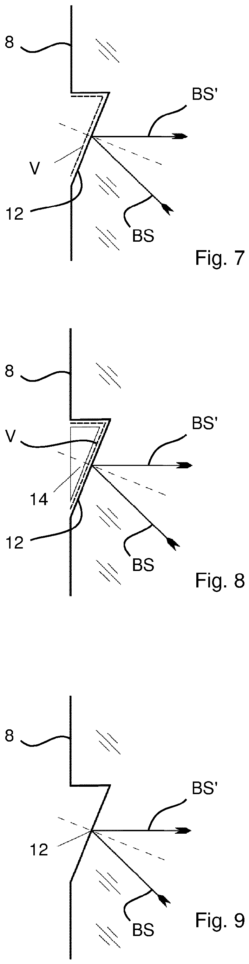

Bei der beschriebenen Ausführungsform sind die Umlenkspiegel 12 durch eine Verspiegelung V der geneigten Abschnitte gebildet, wie dies in der vergrößerten Ansicht des Details C2 von Fig. 3 in Fig. 7 ersichtlich ist.

In Fig. 8 ist eine Abwandlung gezeigt, bei der der freie Bereich, der aufgrund der Neigung des Umlenkspiegels 12 relativ zur Vorderseite 8 des Multifunktionsglases 1 gebildet ist, mit Material 14 bis zur Vorderseite 8 aufgefüllt ist. Die Auffüllung ist bevorzugt so durchgeführt, daß eine glatte, durchgehende Vorderseite 8 gebildet ist. Als Material 14 kann insbesondere das gleiche Material wie für das Multifunktionsglas 1 selbst verwendet werden.

Es ist jedoch auch möglich, den Strahlvereiniger 1 so auszulegen, daß die Umlenkung des Bildstrahlenbündels BS durch innere Totalreflexion erfolgt, so daß eine Verspiegelung nicht mehr notwendig ist, wie in Fig. 9 gezeigt ist. In diesem Fall wird das Umgebungsstrahlenbündel US auch von den Umlenkelementen 12 transmittiert.

Natürlich ist es auch möglich, die Umlenkelemente 12 mit einer Teilverspiegelung zu versehen, so daß sie sowohl reflektiv für das Bildstrahlenbündel BS als auch transmissiv für das Umgebungsstrahlenbündel US wirken.

Ferner ist es möglich, statt reflektiven Umlenkelementen refraktive Umlenkelemente auszubilden. In diesem Fall wird der Überlagerungsbereich 9 bevorzugt auf der Innenseite 16 des Multifunktionsglas 1 ausgebildet.

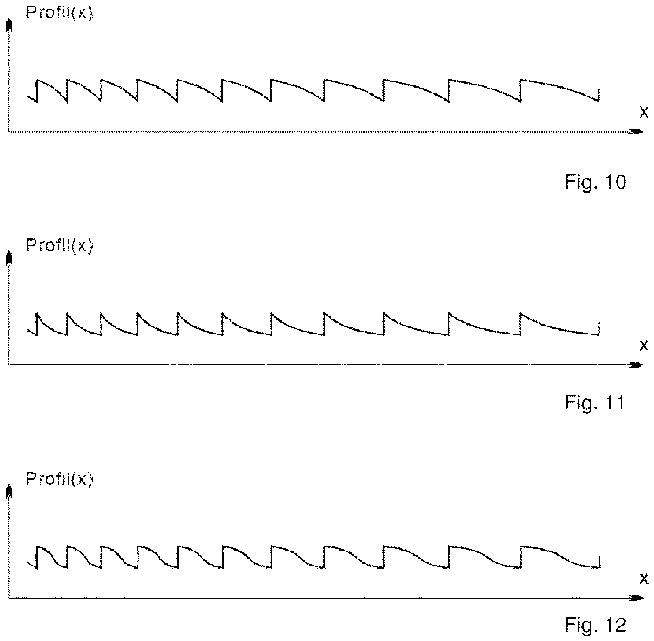

Bei den bisher beschriebenen Ausführungsformen war die Profilform der Umlenkelemente 12 in den gezeigten Schnittdarstellungen stets linear. Es sind jedoch auch andere Profilformen möglich. So können die Flanken im Schnitt konvex gekrümmt sein, wie in Fig. 10 angedeutet ist. Die Darstellung in Fig. 10 wie auch in den Fig. 11 und 12 entspricht der Darstellung von Fig. 5, so daß ausgehend von dieser Profilform noch bereichsweise der sphärische Radius anstatt des gezeigten Profilverlaufs vorzusehen ist, um dann zu dem gewünschten Profilverlauf in den Unterabschnitten S zu kommen. Auch eine konkave Flankenkrümmung, wie sie in Fig. 11 angedeutet ist, kann vorgesehen sein.

Ferner kann eine beliebige Krümmung vorgesehen werden, wie schematisch in Fig. 12 angedeutet ist.

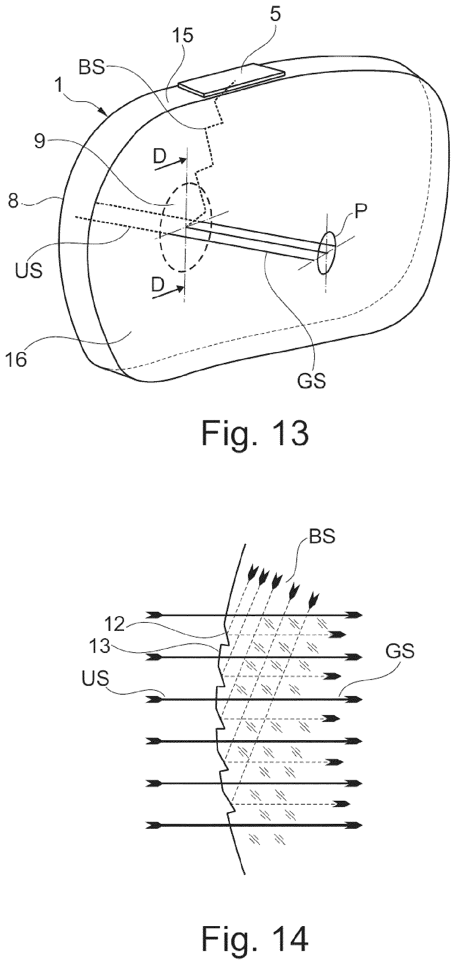

In Fig. 13 ist eine Abwandlung des Multifunktionsglases 1 von Fig. 1 gezeigt. Bei dieser Abwandlung ist das Bilderzeugungsmodul bzw. der Bildgeber 5 am oberen Rand 15 angeordnet. Das von dem Bildgeber 5 abgegebene Bildstrahlenbündel BS wird in dem Glas 1 durch innere Totalreflexion an der Vorderseite 8 sowie der Rückseite 16 des Glases 1 bis zum Überlagerungsbereich 9 geführt, in dem in gleicher Weise wie in Fig. 2 eine Vielzahl von Unterabschnitten S mit den Umlenkelementen 12 angeordnet sind.

In Fig. 14 ist ein Schnitt durch einen solchen Unterabschnitt S entlang der Linie D-D vergrößert schematisch dargestellt. Aufgrund der Überlagerung vom Bildstrahlenbündel BS und dem Umgebungsstrahlenbündel US wird das gewünschte gemeinsame Strahlenbündel GS erzeugt, so daß ein Benutzer, der eine Brille mit einem solchen Multifunktionsglas 1 trägt, mit seinem im Pupillenbereich P, der von der Rückseite 16 beabstandet ist, positionierten Auge A die Umgebung in Überlagerung mit dem vom Bildgeber 5 erzeugten Bild wahrnehmen kann.

Bei der in Fig. 13 und 14 gezeigten Ausführungsform sowie bei allen bisher beschriebenen Ausführungsformen ist der Überlagerungsbereich in der Vorderseite 8 ausgebildet. Die Umlenkspiegel 12 sind integral in der Vorderseite 8 ausgebildet, so daß der Überlagerungsbereich 9 Bestandteil der Vorderseite 8 des Multifunktionsglases 1 ist.

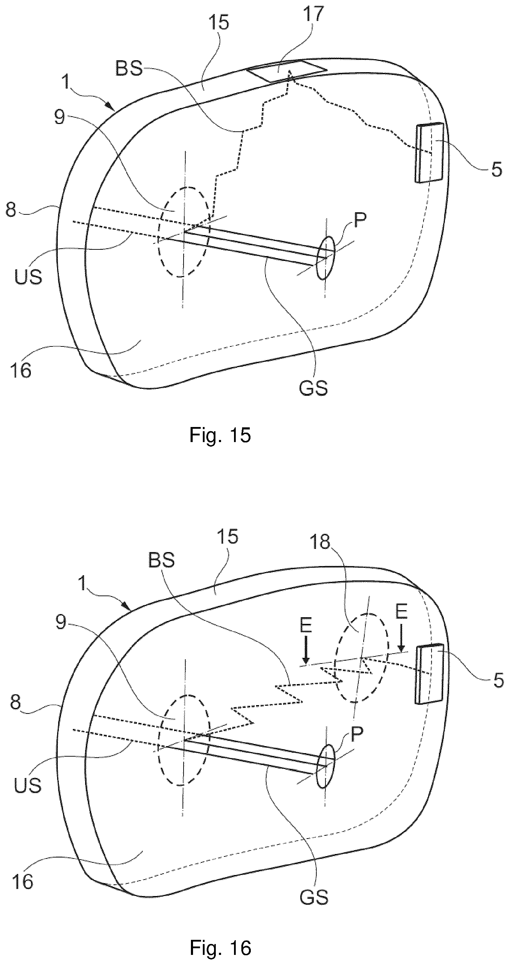

In Fig. 15 ist eine weiteren Ausführungsform des Multifunktionsglases 1 gezeigt, wobei hier wie auch bei den nachfolgend noch beschriebenen Ausführungsformen gleiche Elemente mit gleichen Bezugszeichen bezeichnet sind und zur Vermeidung von unnötigen Wiederholungen auf die entsprechende obige Beschreibung verwiesen wird.

Bei der Ausführungsform von Fig. 15 ist der Bildgeber 5 an der Rückseite 16 des Multifunktionsglases oder von der Rückseite 16 beabstandet angeordnet, so daß das Bildstrahlenbündel BS über die Rückseite 16 in das Glas 1 eintritt. Das Bildstrahlenbündel BS wird dann über innere Totalreflexion an der Vorder- und Rückseite 8, 16 bis zu einem Bereich 17 des oberen Randes 15 geführt. Der Bereich 17 ist verspiegelt, so daß das Bildstrahlenbündel BS in Richtung zum Überlagerungsbereich 9 reflektiert wird. Zwischen dem Spiegelbereich 17 und dem Überlagerungsbereich 9 wird das Bildstrahlenbündel BS wiederum durch innere Totalreflexion an der Vorder- und Rückseite 8, 16 geführt. Im Überlagerungsbereich 9 findet die gewünschte Überlagerung zur Erzeugung des gesamten Strahlenbündels GS statt.

Die Fläche des Spiegelbereiches 17, die die Reflexion bewirkt, kann eben sein. Es ist jedoch auch jede beliebige Krümmung möglich. Insbesondere kann sie gekrümmt sein und keine Rotations- oder Spiegelsymmetrie aufweisen. Ferner kann sie bevorzugt auch keine Translationssymmetrie aufweisen.

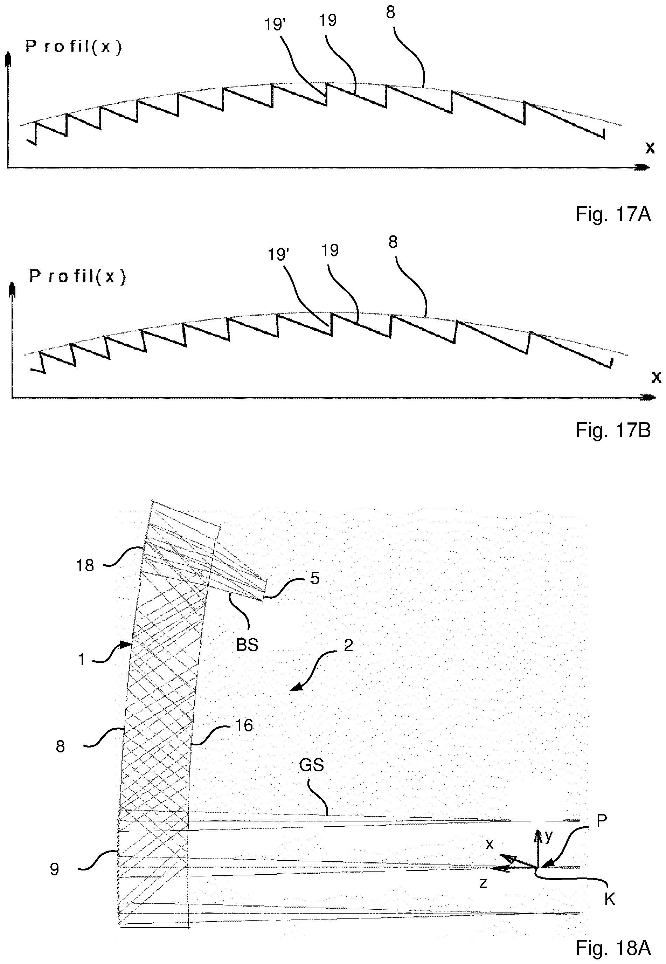

Bei der Ausführungsform von Fig. 16 ist der Bildgeber 5 zwar wieder auf der Rückseite oder von dieser beabstandet so angeordnet, daß das Bildstrahlenbündel BS über die Rückseite 16 in das Multifunktionsglases 1 eintritt. Jedoch läuft bei der Ausführungsform von Fig. 16 das Bildstrahlenbündel BS direkt zur Vorderseite 8, in der ein Umlenkbereich 18 ausgebildet ist. Dieser Umlenkbereich 18 weist eine Vielzahl von nebeneinander angeordneten Umlenkspiegeln 19 auf, die sich im wesentlichen parallel zueinander erstrecken können. Die Umlenkspiegel 19 verlaufen in der Darstellung von Fig. 16 von oben nach unten und sind gegenüber der Vorderseite 8 gekippt. Im Unterschied zu den Umlenkspiegeln 12 des Überlagerungsbereiches sind keine Zwischenräume zwischen den einzelnen Umlenkspiegeln 19 vorgesehen, so daß der Umlenkbereich 18 auch als Fresnel-Bereich oder Fresnel-Fläche 18 bezeichnet werden kann. In Fig. 17A ist die Schnittansicht entlang der Linie E-E in Fig. 16 gezeigt. Im Schnitt sind die Umlenkspiegel 19 linear und an der gekrümmten Basisfläche, die hier die Vorderseite 8 des Multifunktionsglases ist, angeordnet. Die einzelnen Flanken 19', die die Umlenkspiegel miteinander verbinden, sind zueinander parallel ausgerichtet. Der ursprüngliche Verlauf der Vorderseite 8 ist hier noch schematisch eingezeichnet.

In einer (nicht gezeigten) Abwandlung des Multifunktionsglases 1 von Fig. 16 ist noch eine weitere Fresnel-Fläche auf der Vorderseite 8 oder Rückseite 16 des Glases 1 zwischen dem Umlenkbereich 18 und dem Überlagerungsbereich 9 zur Strahlführung vorgesehen. Diese weitere Fresnel-Fläche kann in gleicher Art und Weise wie der Umlenkbereich 18 oder der Überlagerungsbereich 9 ausgebildet sein.

In Fig. 17B ist eine Abwandlung des Profils von Fig. 17A gezeigt, das sich im wesentlichen darin unterscheidet, daß die Flanken 19', die die Umlenkspiegel 19 verbinden, im Schnitt nicht mehr zueinander parallel orientiert sind, sondern radial zum nicht gezeigten Mittelpunkt der Vorderseite 8.

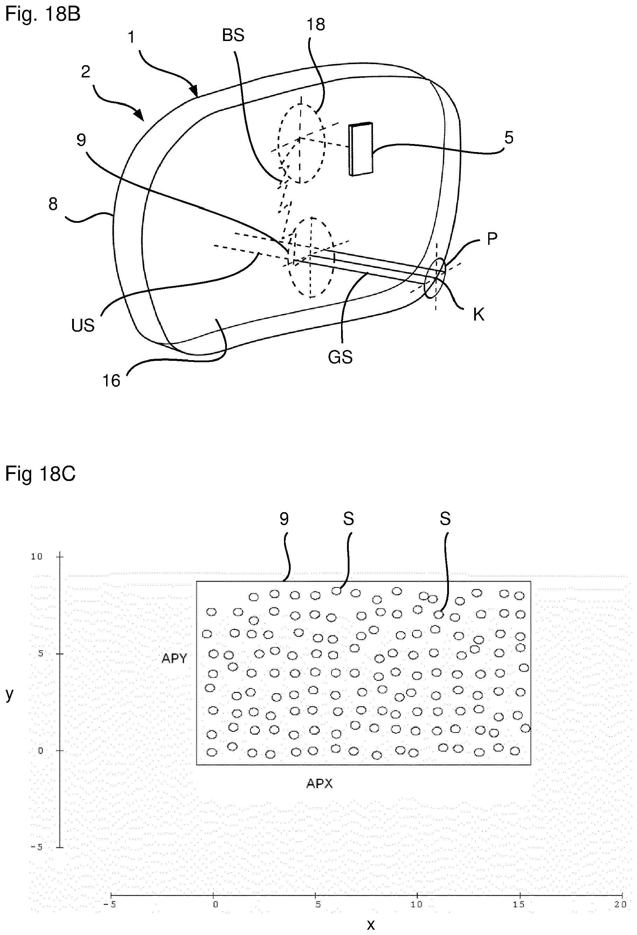

In Fig. 18A ist eine schematische Seitenansicht einer weiteren Ausführungsform der erfindungsgemäßen Anzeigevorrichtung 2 gezeigt, wobei lediglich das Multifunktionsglas 1, das Bilderzeugungsmodul 5, die Augenposition K sowie einige beispielhafte Strahlenverläufe für das Bildstrahlenbündel BS und das gemeinsame Strahlenbündel GS eingezeichnet sind. In Fig. 18B ist die entsprechende perspektivische Ansicht der Anzeigevorrichtung 2 von Fig. 18A dargestellt.

Wie der Darstellung in Fig. 18A und 18B zu entnehmen ist, ist im Unterschied zu der Ausführungsform von Fig. 16 der Umlenkbereich 18 nicht mehr seitlich neben dem Überlagerungsbereich 9, sondern oberhalb des Überlagerungsbereiches 9 angeordnet.

Der Umlenkbereich 18 ist hier ein Einkoppelbereich bzw. -abschnitt, über den das Bild des Bilderzeugungsmoduls 5 so in das Multifunktionsglas 1 eingekoppelt wird, daß das Bildstrahlenbündel BS mittels interner Totalreflexionen bis zum Überlagerungs- bzw. Auskoppelbereich 9 geführt wird.

Das Multifunktionsglas 1 weist eine sphärisch gekrümmte, konvexe Vorderseite 8 mit einem Radius von 143,5 mm sowie eine sphärisch gekrümmte, konkave Rückseite 16 mit einem Krümmungsradius von 140,0 mm auf, wobei die Dicke des Brillenglases 3,5 mm beträgt und als Material für das Brillenglas PMMA verwendet wurde.

Die Fresnel-Struktur des Umlenkbereichs 18 kann in gleicher Weise wie für die Umlenkspiegel 12 gemäß der obigen Formel (2) angegeben werden, wobei hier der gesamte Umlenkbereich 18 als zusammenhängende Fresnel-Fläche ausgebildet ist (also ohne einen bereichsweisen Austausch mit der sphärischen Vorderseite 8) und als Flächen-Funktion f(x,y) folgende Funktion verwendet wird:

$$f(x, y) = \sum_{i=0}^{M} \sum_{j=0}^{N} \left( c_{k(i,j)} \cdot x^i \cdot y^j \right) \tag{3},$$

wobei k(i,j) wie folgt bestimmt ist

$$k(i, j) = \frac{(i+j)^2 + i + 3 \cdot j}{2} + 1 \tag{4}.$$

Die Tiefe der Fresnel-Struktur bzw. der Fresnel-Zacken in z-Richtung und somit der Wert für $\Delta h$ beträgt hier 0,1 mm und die Fresnel-Polynomkoeffizienten lauten wie folgt:

| i | j | k | Wert |
|---|---|---|------|
| 0 | 1 | 2 | 1.978676e+000 |
| 0 | 2 | 5 | -1.683682e-001 |
| 0 | 3 | 9 | 6.583886e-003 |
| 0 | 4 | 14 | -1.592897e-004 |
| 0 | 5 | 20 | 1.673948e-006 |
| 2 | 0 | 3 | -1.260064e-002 |
| 2 | 1 | 7 | -1.594787e-004 |
| 2 | 2 | 12 | 5.047552e-005 |
| 2 | 3 | 18 | -1.124591e-006 |
| 2 | 4 | 25 | -3.539047e-008 |
| 2 | 5 | 33 | 6.224301e-010 |
| 4 | 0 | 10 | 2.326468e-004 |
| 4 | 1 | 16 | -2.256722e-005 |
| 4 | 3 | 31 | 2.658107e-008 |

Alle nicht genannten Koeffizienten k(i, j), die in obigen Tabellen nicht aufgeführt sind, sind gleich 0.

Auch die Fresnel-Struktur für den Auskoppelbereich 9 kann mittels der Formeln (2) bis (4) beschrieben werden. Die entsprechenden Fresnel-Polynomkoeffizienten sind in der nachfolgenden Tabelle angegeben, wobei wiederum alle nicht genannten Koeffizienten k(i, j), die in der Tabelle nicht aufgeführt sind, gleich 0 sind.

| i | j | k | Wert |
|---|---|---|------|
| 0 | 1 | 2 | 3.889550e-001 |
| 0 | 2 | 5 | -3.833425e-003 |
| 0 | 3 | 9 | -2.736702e-007 |
| 0 | 4 | 14 | 1.935143e-006 |
| 0 | 5 | 20 | 9.627233e-007 |
| 2 | 0 | 3 | -5.487613e-003 |
| 2 | 1 | 7 | 5.506765e-005 |
| 2 | 2 | 12 | 1.146413e-006 |
| 2 | 3 | 18 | 2.124906e-006 |
| 2 | 4 | 25 | -7.838697e-008 |
| 2 | 5 | 33 | -7.841081e-008 |

(fortgesetzt)

| i | j | k | Wert |
|---|---|---|---|
| 4 | 0 | 10 | 4.996870e-008 |
| 4 | 1 | 16 | -5.316581e-007 |
| 4 | 3 | 31 | -2.683089e-008 |

Auch bei der Fresnel-Struktur des Auskoppelbereichs bzw. -abschnittes 9 beträgt Δh gleich 0,1 mm.

Die Lage der optischen Flächen im globalen Koordinatensystem der Pupille P des Auges A (der Koordinatenursprung liegt bei K) kann unter Bezugnahme auf die Richtung der Koordinaten x, y und z in Fig. 18A jeweils bezogen auf die Fläche in der unmittelbar vorgehenden Zeile wie folgt angegeben werden (die in Fig. 18A eingezeichneten Koordinaten x, y und z beziehen sich auf das Koordinatensystem der Pupille P, das nur für die Beschreibung der Fresnel-Strukturen des Ein- und Auskoppelbereiches 18 und 9 in Verbindung mit Fig. 18A verwendet wird):

| Fläche | x-Koordinate [mm] | z-Koordinate [mm] | Kippwinkel um x-Achse (°) |
|---|---|---|---|
| P | 0,000 | 0,000 | 0,000 |
| 9 | 0,000 | 21,500 | 0,000 |
| 18 | 0,000 | 0,000 | 0,000 |
| 5 | 0,000 | 16,828 | 14,042 |

Bei dem Ein- und Auskoppelbereich 18 und 9 ist die Lage des Koordinatensystems angegeben, bezüglich der die Fresnel-Fläche in der oben angegebenen Art und Weise definiert ist. Daher sind für die Fläche 18 als Werte jeweils 0 angegeben, da die Koordinatensysteme für die Flächen 9 und 18 zusammenfallen. Die Lage und Größe der genutzten Aperturfläche der jeweiligen Fresnel-Fläche, was dem Einkoppelabschnitt 18 sowie dem Auskoppelabschnitt 9 entspricht, sind bezüglich des flächeneigenen Koordinatensystems wie folgt:

| Element | x-Koordinate [mm] | y-Koordinate [mm] | APX [mm] | APY [mm] |
|---|---|---|---|---|
| 9 | 0,000 | 0,000 | 14,5 | 7,1 |
| 18 | 0,000 | 19,87 | 11,6 | 4,8 |

In dieser Tabelle ist in der Spalte APX die Breite der Fresnel-Struktur in x-Richtung und in der Spalte APY die Breite der Fresnel-Struktur in y-Richtung angegeben. Ferner ist der Abstand des Auskoppelabschnittes 9 vom Einkoppelabschnitt 18 angegeben. Der Abstand der Augenpupille P zum Brillenglas (Rückseite 16) beträgt hier 18 mm, wobei das Sichtfeld 20 x 4° bei einem Durchmesser von 6 mm beträgt.

Um eine regelmäßige Anordnung bzw. Struktur der Fresnel-Abschnitte beim Auskoppelbereich 9 zu verhindern, können sie z.B. nur in den rechteckigen Unterabschnitten S (Fig. 2) angeordnet sein. Die Unterabschnitte S können auch kreisförmig sein, wie in der schematischen Draufsicht auf den beispielweise rechteckigen Auskoppelbereich 9 in Fig. 18C gezeigt ist und was für die nachfolgende Beschreibung angenommen wird. Es werden kreisförmige Bereich festgelegt, deren Durchmesser wie folgt bestimmt werden kann

$$D = \sqrt{(100 - T)/100/\pi} \cdot 2 \cdot APX / N$$

Wobei T die geforderte Transmission für das Umgebungslicht in Prozent, N die Anzahl der Kreise in x-Richtung und APX die Aperturbreite in x-Richtung ist. Die Kreise werden zunächst in einem festen Raster mit Rasterabstand APX/N in x und y äquidistant angeordnet. Danach werden die Kreismittelpunktslagen leicht modifiziert, indem die Richtung und Länge der Mittelpunktverschiebung ausgewürfelt werden. Die Länge wird hier so gewählt, daß kein Überlappungseffekt zwischen benachbarten Kreisen auftritt.

Als Statistikfunktionen für Länge und Winkel können folgende Formeln angewendet werden.

Statistische Verschiebungslänge:

$$r = (APX / N / 2 - D / 2) \cdot randf$$

Statistische Verschiebungsrichtung :

$$w = 360 \cdot randf$$

Wobei randf einen Zufallswert zwischen 0 und 1 liefert. Die modifizierte Position der Kreise ergibt sich dann gemäß den nachfolgenden Formeln:

$$x = ( i / N ) \cdot APX + r \cdot \cos( w )$$

$$y = ( j / N ) \cdot APX + r \cdot \sin( w )$$

$$M = round ( APY / APX )$$

Wobei die Funktion round das Argument (APY/APX) auf ganze Zahlen rundet.

Natürlich kann auch jede andere Art der Verteilung der Fresnel-Struktur gewählt werden, wobei bevorzugt eine nicht regelmäßige Anordnung gewählt wird.

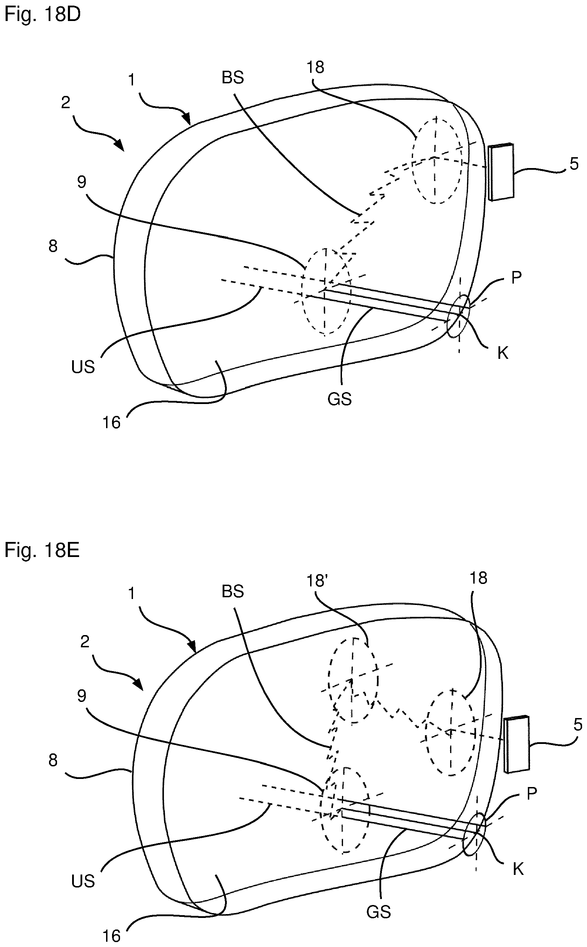

In Fig. 18D und 18E sind Abwandlungen der Anzeigevorrichtung 2 gemäß Fig. 18A und 18B gezeigt. Bei der Ausführungsform von Fig. 18D ist der Einkoppelabschnitt 18 sowohl lateral als auch vertikal zum Auskoppelabschnitt 9 versetzt. Bei der Ausführungsform von Fig. 18E zwischen dem Einkoppel- und dem Auskoppelabschnitt 18 und 9 ein Umlenkabschnitt 18' auf der Vorderseite 8 gebildet, der in gleicher Weise wie der Einkoppelabschnitt 18 als Fresnel-Struktur (hier als reflektive Fresnel-Struktur) ausgebildet sein kann. Insbesondere kann der Umlenkabschnitt 18' neben der von ihm bewirkten Strahlengangfaltung auch noch eine abbildende Eigenschaft aufweisen (in gleicher bzw. ähnlicher Weise wie der Einkoppelabschnitt 18 und gegebenenfalls der Auskoppelabschnitt 9).

Die Ausbildung des Einkoppel- und Auskoppelabschnittes 18 und 9 sowie gegebenenfalls des Umlenkabschnittes 18' auf der gleichen Seite des Multifunktionsglases (hier auf der Vorderseite 8) erleichtert die Herstellung des Multifunktionsglases 1.

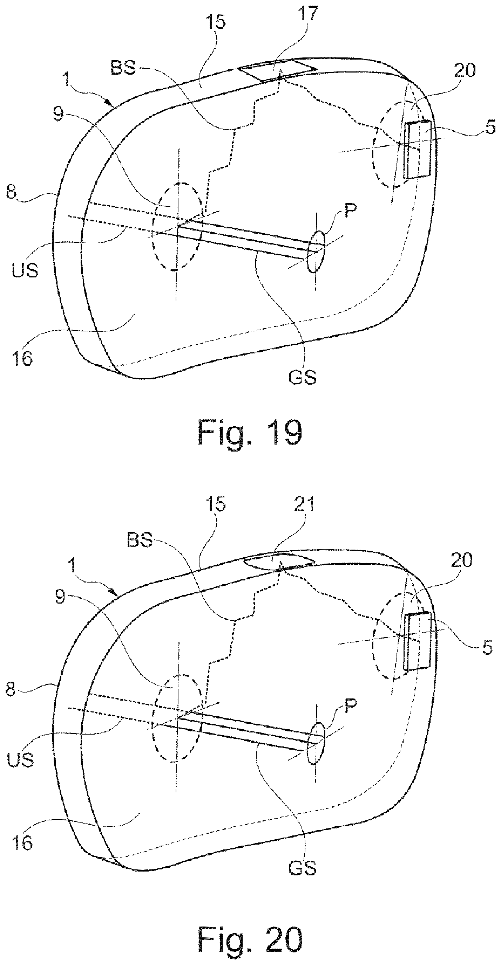

In Fig. 19 ist eine weitere Abwandlung des Multifunktionsglases 1 gezeigt. Das Bildstrahlenbündel BS tritt wiederum von der Rückseite 16 in das Multifunktionsglas 1 ein, wird an der Vorderseite 8 von einer Fresnel-Fläche 20 in Richtung zum oberen Rand 15 hin reflektiert. Die Fresnel-Fläche 20 ist grundsätzlich gleich aufgebaut wie die Fresnel-Fläche 18 in Fig. 16. Lediglich die Ausrichtung der Kippung der Umlenkspiegel der Fresnel-Fläche 20 ist so gewählt, daß die in Fig. 19 gezeigte Umlenkung erfolgt. Das Bildstrahlenbündel BS wird nach Umlenkung an der Fresnel-Fläche 20 mittels innerer Totalreflexion an Rück- und Vorderseite 16, 8 bis zum Spiegelbereich 17 geführt, dort reflektiert und wiederum mittels innerer Totalreflexion zwischen Vorder- und Rückseite 8, 16 bis zum Überlagerungsbereich 9 geführt.

In Fig. 20 ist eine Abwandlung des Multifunktionsglases von Fig. 19 gezeigt. In dieser Abwandlung ist statt des Spiegelbereiches 17 eine weitere Fresnel-Fläche 21 ausgebildet, die grundsätzlich den gleichen Aufbau aufweist wie die Fresnel-Fläche 18. Lediglich die Ausrichtung der Umlenkspiegel der Fresnel-Fläche 21 ist so gewählt, daß die in Fig. 20 gezeigte Umlenkung des Bildstrahlenbündels BS erfolgt.

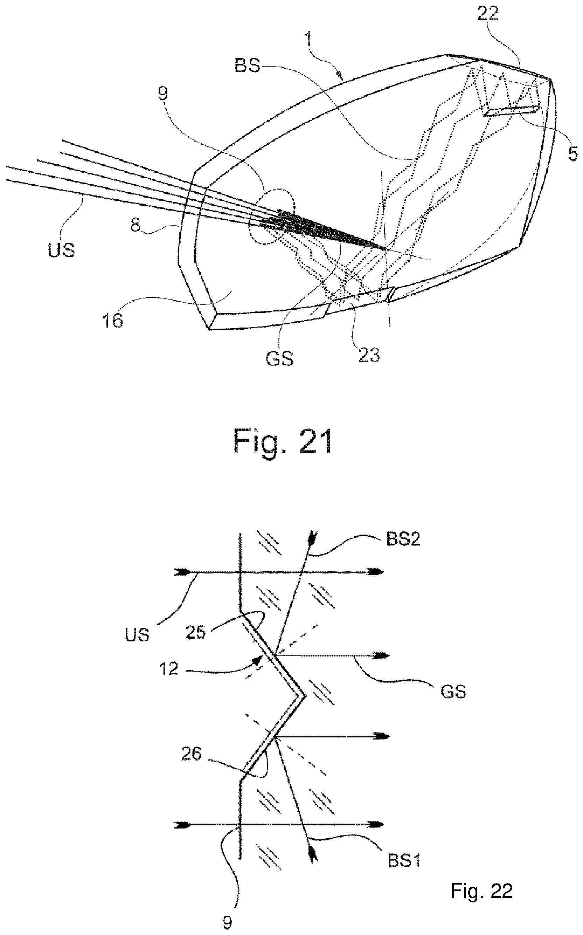

In Fig. 21 ist eine weitere Ausführungsform des Multifunktionsglases 1 gezeigt. Bei dieser Ausführungsform tritt das Bildstrahlenbündel BS vom Bildgeber 5 wiederum von der Rückseite 16 in das Multifunktionsglas 1 ein, wird am oberen Rand an einem ersten Umlenkbereich 22 in Richtung zu einem zweiten Umlenkbereich 23 am unteren Rand des Multifunktionsglases 1 hin reflektiert, und dort in Richtung zum Überlagerungsbereich 9 reflektiert. Die Führung im Multifunktionsglas 1 erfolgt wiederum mittels innerer Totalreflexion an der Vorder- und Rückseite 8, 16 des Glases 1. Die Umlenkbereiche 22 und 23 können als verspiegelte Bereiche, als Fresnel-Flächen oder auch als Bereiche ausgebildet sein, bei denen die Umlenkung mittels innerer Totalreflexion erfolgt.

In Fig. 22 ist eine Weiterbildung des Umlenkspiegels 12 gezeigt. In dieser Weiterbildung weist der Umlenkspiegel 12 zwei Spiegelflanken 25 und 26 auf, die verspiegelt sind. Somit können drei Strahlenbündel miteinander überlagert werden, nämlich zwei Bildstrahlenbündel BS1 und BS2 mit dem Umgebungsstrahlenbündel US, wie in der schematischen Darstellung von Fig. 23 ersichtlich ist. Umlenkspiegel 12 mit den beiden Spiegelflanken 25 und 26 können in gleicher Weise wie die bereits beschriebenen Umlenkspiegel 12 der obigen Ausführungsformen angeordnet werden.

**Patentansprüche**

**1.** Anzeigevorrichtung mit

einem einen Überlagerungsbereich (9) aufweisenden Strahlvereiniger zur Vereinigung eines ersten Strahlenbündels (US) mit einem dazu nicht parallel verlaufenden zweiten Strahlenbündel (BS) zu einem gemeinsamen Strahlenbündel,

einem Bilderzeugungsmodul (5) und

einer auf den Kopf eines Benutzers aufsetzbaren Haltevorrichtung (3), an der der Strahlvereiniger (1) so befestigt ist, dass ein Benutzer im aufgesetzten Zustand der Haltevorrichtung (3) die reale Umgebung durch den Überlagerungsbereich (9) des Strahlvereinigers (1) aufgrund des ersten Strahlenbündels (US), das vom Überlagerungsbereich (9) transmittiert wird, wahrnehmen kann,

wobei das Bilderzeugungsmodul (5) ein Bild erzeugt und als das zweite Strahlenbündel (BS) so auf den Überlagerungsbereich (9) richtet, dass der Benutzer im auf den Kopf aufgesetzten Zustand der Haltevorrichtung (3) das Bild in Überlagerung mit der realen Umgebung wahrnehmen kann,

wobei der Strahlvereiniger einen für das erste Strahlenbündel (US) transparenten Körper umfasst, der den Überlagerungsbereich (9) aufweist, auf den das erste Strahlenbündel (US) bei Durchlaufen des Körpers trifft,

wobei das zweite Strahlenbündel (BS) im transparenten Körper bis zum Überlagerungsbereich (9) geführt ist,

**dadurch gekennzeichnet, dass**

der Überlagerungsbereich (9) in einen ersten Abschnitt (10) und einen zweiten Abschnitt (11) aufgeteilt ist,

wobei nur der erste Abschnitt (10), der aus einer Vielzahl von voneinander beabstandeten reflektiven und/oder refraktiven Umlenkelementen (12) gebildet ist, eine Umlenkung des zweiten Strahlenbündels (BS) durch Reflexion und/oder Brechung so bewirkt, dass das erste Strahlenbündel (US) nach Verlassen des Körpers zusammen mit dem umgelenkten zweiten Strahlenbündel (BS) das gemeinsame Strahlenbündel (GS) bildet, und

wobei aufgrund der beabstandeten Anordnung der Umlenkelemente (12) Zwischenräume zwischen den einzelnen Umlenkelementen (12) vorliegen, wobei die Zwischenräume Teil des zweiten Abschnitts (11) sind,

wobei der zweite Abschnitt (11) das erste Strahlenbündel (US) transmittiert und

der erste Abschnitt (10) eine abbildende Funktion für das zweite Strahlenbündel (BS) besitzt.

2. Anzeigevorrichtung nach einem der obigen Ansprüche, bei der die Fläche des ersten Abschnitts (10), in Draufsicht auf den Überlagerungsbereich (9) gesehen, 5 bis 30 % der Fläche des Überlagerungsbereichs (9) beträgt.

3. Anzeigevorrichtung nach Anspruch 1, bei der die Fläche des ersten Abschnitts (10), in Draufsicht auf den Überlagerungsbereich (9) gesehen, mindestens 50 % der Fläche des Überlagerungsbereichs (9) beträgt.

4. Anzeigevorrichtung nach einem der obigen Ansprüche, bei der die Umlenkelemente (12) an einer Materialgrenzfläche des Körpers ausgebildet sind.

5. Anzeigevorrichtung nach Anspruch 4, bei der die Materialgrenzfläche, an der die Umlenkelemente (12) ausgebildet ist, gekrümmt ist.

6. Anzeigevorrichtung nach einem der obigen Ansprüche, bei der jedes Umlenkelement (12) plan ausgebildet ist.

7. Anzeigevorrichtung nach einem der obigen Ansprüche, bei dem die Umlenkelemente (12) unregelmäßig im Überlagerungsbereich (9) verteilt sind.

8. Anzeigevorrichtung nach einem der obigen Ansprüche, bei der jedes Umlenkelement (12) polygonförmig ausgebildet ist.

9. Anzeigevorrichtung nach einem der obigen Ansprüche, bei der die maximale Ausdehnung jedes Umlenkelementes (12) bis zu 200 $\mu$m beträgt und insbesondere im Bereich von 20-30 $\mu$m liegt.

10. Anzeigevorrichtung nach einem der obigen Ansprüche, bei der der Teil des ersten Strahlenbündels (US), der auf den ersten Abschnitt (10) trifft, abgeschattet und somit nicht Teil des gemeinsamen Strahlenbündels (GS) wird.

11. Anzeigevorrichtung nach einem der obigen Ansprüche, bei der der erste Abschnitt (10) in Art einer nicht zusammenhängenden Fresnel-Struktur ausgebildet ist.

12. Anzeigevorrichtung nach einem der obigen Ansprüche, bei der der Strahlvereiniger (1) einen Einkoppelbereich (18, 20) aufweist, über den das zweite Strahlenbündel (BS) in den Strahlvereiniger (1) eingekoppelt und dann im Strahlvereiniger (1) bis zum Überlagerungsbereich (9) geführt wird, wobei der Einkoppelbereich (18, 20) als Fresnel-Fläche ausgebildet ist, die eine Strahlengangfaltung bewirkt.

**13.** Anzeigevorrichtung nach Anspruch 12, bei der die Fresnel-Fläche (18, 20) eine abbildende Eigenschaft für das zweite Strahlenbündel (BS) aufweist.

**14.** Anzeigevorrichtung nach Anspruch 12 oder 13, bei der die Fresnel-Fläche (18, 20) an einer gekrümmten Materialgrenzfläche des Strahlvereinigers (1) ausgebildet ist.

**Claims**

**1.** Display device comprising

a beam combiner comprising a superimposition area (9) for combining a first beam (US) with a second beam (BS) which is not parallel thereto to form a common beam,
an image-forming module (5) and
a holding device (3) which can be placed on the head of a user and to which the beam combiner (1) is fastened in such a way that a user, when the holding device (3) is placed on the head, can see the real environment through the superimposition area (9) of the beam combiner (1) on the basis of the first beam (US), which is transmitted from the superimposition area (9), the image-generating module (5) generating an image and directing it as the second beam (BS) onto the superimposition area (9) in such a way that the user can perceive the image in superimposition with the real environment when the holding device (3) is placed on the head, the beam combiner comprising a body which is transparent to the first beam (US) and comprises the superimposition area (9), which the first beam (US) encounters as it passes through the body,
the second beam (BS) being guided in the transparent body as far as the superimposition area (9),
**characterized in that**
the superimposition area (9) is divided into a first section (10) and a second section (11), wherein only the first section (10), which is formed from a plurality of reflective and/or refractive deflecting elements (12) spaced apart from one another, effects a deflection of the second beam (BS) by reflection and/or refraction in such a way that the first beam (US), after leaving the body, forms the common beam (GS) together with the deflected second beam (BS), and wherein intermediate spaces are present between the individual deflecting elements (12) due to the spaced arrangement of the deflecting elements (12), wherein the intermediate spaces are part of the second section (11),
wherein the second section (11) transmits the first beam (US) and
the first section (10) has an imaging function for the second beam (BS).

**2.** Display device according to one of the preceding claims, wherein the area of the first section (10), seen in plan view of the superimposition area (9), is 5 to 30 % of the area of the superimposition area (9).

**3.** Display device according to claim 1, in which the area of the first section (10), as seen in plan view of the overlay area (9), is at least 50% of the area of the overlay area (9).

**4.** Display device according to one of the preceding claims, wherein the deflecting elements (12) are formed at a material interface of the body.

**5.** Display device according to claim 4, wherein the material interface at which the deflecting elements (12) are formed is curved.

**6.** Display device according to any one of the preceding claims, wherein each deflecting element (12) is formed flat.

**7.** Display device according to one of the preceding claims, wherein the deflecting elements (12) are irregularly distributed in the overlay region (9).

**8.** Display device according to one of the preceding claims, wherein each deflecting element (12) is polygonal in shape.

**9.** Display device according to one of the preceding claims, wherein the maximum extension of each deflecting element (12) is up to 200 $\mu$m and in particular is in the range of 20-30 $\mu$m.

**10.** Display device according to one of the preceding claims, wherein the part of the first beam (US) which strikes the first section (10) is shadowed and thus does not become part of the common beam (GS).

**11.** Display device according to one of the preceding claims, wherein the first section (10) is formed in the manner of a non-contiguous Fresnel structure.

**12.** Display device according to one of the preceding claims, in which the beam combiner (1) comprises an input coupling region (18, 20), via which the second beam bundle (BS) is coupled into the beam combiner (1) and then guided in the beam combiner (1) up to the superimposition area (9), the input coupling region (18, 20) being designed as a Fresnel surface which causes beam path folding.

**13.** Display device according to claim 12, wherein the Fresnel surface (18, 20) comprises an imaging property for the second beam (BS).

**14.** Display device according to claim 12 or 13, wherein the Fresnel surface (18, 20) is formed at a curved material boundary surface of the beam combiner (1).

**Revendications**

**1.** Dispositif d'affichage comprenant

un combineur de rayons possédant une zone de superposition (9) pour combiner un premier faisceau de rayons (US) avec un deuxième faisceau de rayons (BS) non parallèle à celui-ci en un faisceau de rayons commun, un module de génération d'images (5) et
un dispositif de maintien (3) pouvant être placé sur la tête d'un utilisateur, auquel le recombineur de rayons (1) est fixé de telle sorte qu'un utilisateur, lorsque le dispositif de maintien (3) est en place, peut voir l'environnement réel à travers la zone de superposition (9) du recombineur de rayons (1) en raison du premier faisceau de rayons (US), qui est transmis par la zone de superposition (9),
le module de génération d'images (5) générant une image et la dirigeant en tant que deuxième faisceau de rayons (BS) sur la zone de superposition (9) de telle sorte que l'utilisateur, lorsque le dispositif de maintien (3) est placé sur la tête, puisse percevoir l'image en superposition avec l'environnement réel,
le recombineur de rayons comprenant un corps transparent pour le premier faisceau de rayons (US), lequel possède la zone de superposition (9), sur laquelle est incident le premier faisceau de rayons (US) en traversant le corps,
le deuxième faisceau de rayons (BS) étant guidé dans le corps transparent jusqu'à la zone de superposition (9), **caractérisé en ce que**
la zone de superposition (9) est divisée en une première section (10) et une deuxième section (11),
seule la première section (10), qui est formée d'une pluralité d'éléments de déviation réfléchissants et/ou réfractifs (12) espacés les uns des autres, provoquant une déviation du deuxième faisceau de rayons (BS) par réflexion et/ou réfraction de telle sorte, que le premier faisceau de rayons (US), après avoir quitté le corps, forme avec le deuxième faisceau de rayons (BS) dévié le faisceau de rayons commun (GS), et
des espaces intermédiaires étant présents entre les différents éléments de déviation (12) en raison de la disposition espacée des éléments de déviation (12), les espaces intermédiaires faisant partie de la deuxième section (11),
la deuxième section (11) transmettant le premier faisceau de rayons (US) et
la première section (10) ayant une fonction de formation d'image pour le deuxième faisceau de rayons (BS).

**2.** Dispositif d'affichage selon l'une des revendications précédentes, dans lequel la surface de la première section (10), vue de dessus de la zone de superposition (9), est comprise entre 5 et 30 % de la surface de la zone de superposition (9).

**3.** Dispositif d'affichage selon la revendication 1, dans lequel la surface de la première section (10), vue de dessus par rapport à la zone de superposition (9), représente au moins 50 % de la surface de la zone de superposition (9).

**4.** Dispositif d'affichage selon l'une des revendications précédentes, dans lequel les éléments de déviation (12) sont formés sur une interface de matière du corps.

**5.** Dispositif d'affichage selon la revendication 4, dans lequel l'interface de matériau sur laquelle les éléments de déviation (12) sont formés est curviligne.

**6.** Dispositif d'affichage selon l'une les revendications précédentes, dans lequel chaque élément de déviation (12) est formé de manière plane.

**7.** Dispositif d'affichage selon l'une des revendications précédentes, dans lequel les éléments de déviation (12) sont répartis de manière irrégulière dans la zone de superposition (9).

**8.** Dispositif d'affichage selon l'une des revendications précédentes, dans lequel chaque élément de déviation (12) est de forme polygonale.

**9.** Dispositif d'affichage selon l'une des revendications précédentes, dans lequel l'extension maximale de chaque élément de déviation (12) peut atteindre 200 $\mu$m et est notamment comprise entre 20 et 30 $\mu$m.

**10.** Dispositif d'affichage selon l'une des revendications précédentes, dans lequel la partie du premier faisceau de rayons (US) qui rencontre la première section (10) est occultée et ne fait donc pas partie du faisceau de rayons commun (GS).

**11.** Dispositif d'affichage selon l'une des revendications précédentes, dans lequel la première section (10) est réalisée à la manière d'une structure de Fresnel non contiguë.

**12.** Dispositif d'affichage selon l'une des revendications précédentes, dans lequel le combineur de faisceaux (1) possède une zone de couplage (18, 20) par laquelle le deuxième faisceau de rayons (BS) est injecté dans le combineur de faisceaux (1) puis guidé dans le combineur de faisceaux (1) jusqu'à la zone de superposition (9), la zone de couplage (18, 20) étant réalisée sous la forme d'une surface de Fresnel qui provoque une convolution du trajet des rayons.

**13.** Dispositif d'affichage selon la revendication 12, dans lequel la surface de Fresnel (18, 20) possède une propriété de formation d'image pour le deuxième faisceau de rayons (BS).

**14.** Dispositif d'affichage selon la revendication 12 ou 13, dans lequel la surface de Fresnel (18, 20) est formée sur une interface de matériau incurvée du séparateur de faisceaux (1).

Fig. 1

Fig. 2

Fig. 3

Fig. 4

Profil (x)

x

Fig. 5

Profil (x)

x

Fig. 6

8

BS'

V

12

BS

Fig. 7

8

V

14

12

BS'

BS

Fig. 8

8

12

BS'

BS

Fig. 9

Profil(x)

x

Fig. 10

Profil(x)

x

Fig. 11

Profil(x)

x

Fig. 12

Fig. 13

Fig. 14

Fig. 15

Fig. 16

Fig. 17A

Fig. 17B

Fig. 18A

Fig. 18B

Fig 18C

Fig. 18D

Fig. 18E

Fig. 19

Fig. 20

Fig. 21

Fig. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007004444 A1
- US 20040085649 A1
- US 2002186179 A1